# EUROPEAN PATENT APPLICATION

(11) **EP 2 394 726 A1**
(43) Date of publication of application: **14.12.2011**
(21) Application number: 11168766.1
(22) Date of filing: 06.06.2011
(51) Int. Cl.: B01D 46/00, G03B 21/16

(54) **Air filter cleaning device and electronic device**

(30) Priority: 08.06.2010 JP 2010131287
(71) Applicant: SANYO ELECTRIC CO., LTD., Moriguchi-shi, Osaka 570-8677 (JP)
(72) Inventor: Kotani, Kazunori, Moriguchi-shi, Osaka 570-8677 (JP)
(74) Representative: Glawe, Delfs, Moll

(57) **Abstract**

An air filter device of a projector, which is an electronic device, includes an air filter and a brush. The air filter includes a cleaning region. The brush cleans the cleaning region while moving relative to the air filter. The cleaning region includes long sides and short sides extending in longitudinal and lateral directions, which are perpendicular to each other. The brush 55 extends along the long sides of the cleaning region.

## Description

### BACKGROUND OF THE INVENTION

The present invention relates to an air filter cleaning device, which cleans an air filter with a brush, and an electronic device including an air filter cleaning device.

A projector, which is an electronic device, includes an intake port formed in a housing to draw in cooling air. An air filter is arranged in the intake port to capture dust, which is suspended in the air drawn into the housing.

Japanese Laid-Open Patent Publication No. 2007-156186 describes a video projector, or electronic device, that incorporates an air filter cleaning device, which linearly moves a brush back and forth in a predetermined direction to clean an air filter.

When the brush is moved to clean the air filter, noise is produced due to, for example, contact between the air filter and the brush or the motor driven to move the brush. Such noise may be annoying to the audience. Thus, it is desirable that the brush perform cleaning within a shorter period of time.

One aspect of the present invention in an air filter cleaning device provided with an air filter including a cleaning region. A brush cleans the cleaning region while moving relative to the air filter. The cleaning region includes a first side and a second side that extend in two perpendicular directions. The brush extends along the longer one of the first and second sides.

A further aspect of the present invention is an air filter cleaning device provided with an air filter including a cleaning region. A brush cleans the cleaning region while moving relative to the air filter. The cleaning region includes a first side and a second side that extend in two perpendicular directions. The brush moves along the shorter one of the first and second sides.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:

Fig. 1 is a perspective view showing a video projector serving as an electronic device according to one embodiment of the present invention;

Fig. 2 is a block diagram of the video projector shown in Fig. 1;

Fig. 3 is a perspective view showing an air filter cleaning device of the video projector shown in Fig. 1;

Fig. 4 is a schematic diagram of the air filter device shown in Fig. 3;

Fig. 5 is a bottom view showing the video projector of Fig. 1; and

Figs. 6(a) and 6(b) are schematic diagrams illustrating the cleaning time shortened by the brush, in which Fig. 6(a) shows an example and Fig. 6(b) shows a comparative example.

### DETAILED DESCRIPTION OF THE INVENTION

A projector 1 according to one embodiment of the present invention will now be discussed with reference to the drawings.

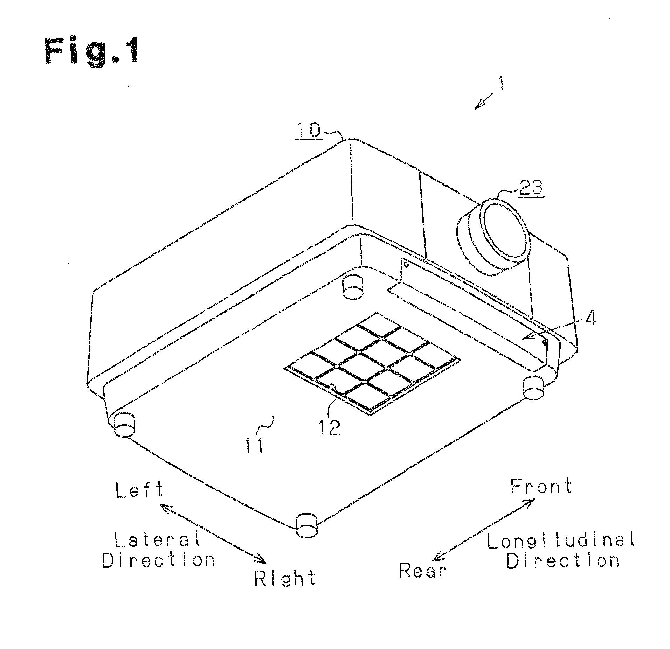

As shown in Fig. 1, the projector, which serves as an electronic device, includes a housing 10, which accommodates electronic components and optical components. The projector 1 is a video projector that projects and displays images on a planar surface such as a screen or wall. In the description hereafter, the long side of the projector 1 extends in a longitudinal direction. The direction in which the projector 1 projects the light of an image is referred to as the frontward direction and the opposite direction is referred to as the rearward direction. When the projector 1 is arranged on a planar horizontal surface (not shown), the short side of the projector 1 extends in a lateral direction. The direction parallel to the horizontal surface and perpendicular to the frontward direction is referred to as the lateral direction. The direction toward the left of the projector 1 is referred to as the leftward direction and the opposite direction is referred to as the rightward direction.

The housing 10 includes a bottom wall 11. When the projector 1 is set on the horizontal surface, the bottom wall 11 faces the horizontal surface. The bottom wall 11 includes an intake port 12 through which air is drawn to cool the interior of the housing 10. The intake port 12 is rectangular when viewed from a direction orthogonal to the bottom wall 11. That is, the intake port 12 has different lateral and longitudinal dimensions. Preferably, a grid (not shown) is arranged in the intake port 12 to prevent foreign matter that is larger than the dust suspended in air from entering the housing 10.

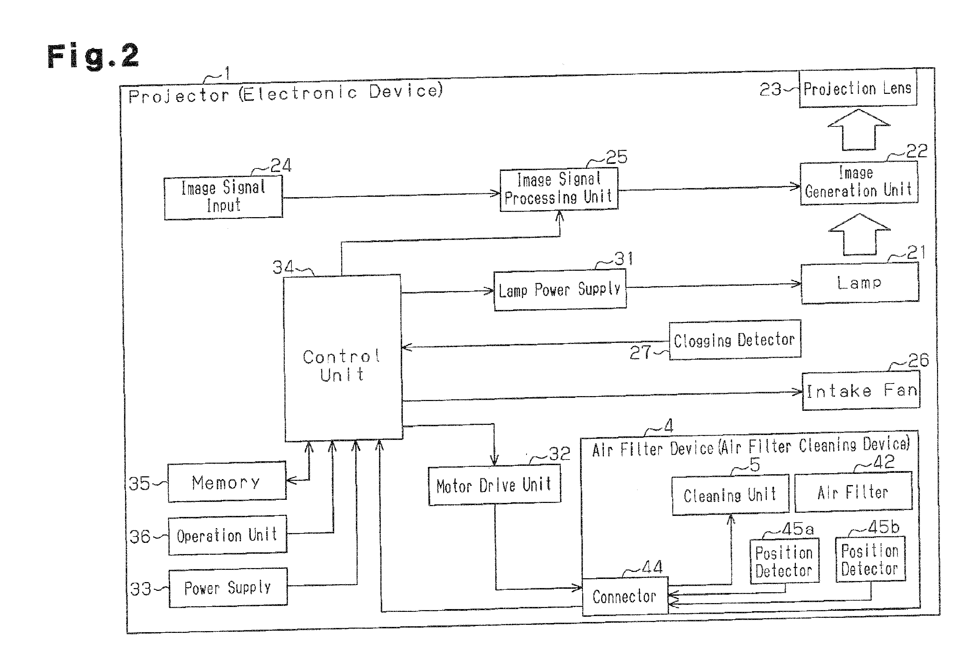

As shown in Fig. 2, the projector 1 includes a lamp 21, an image generation unit 22, and a projection lens 23. The lamp 21 serves as a light source used to display images. The image generation unit 22 uses the light emitted from the lamp 21 to generate images. The projection lens 23 projects light of the generated images.

The lamp 21 is formed by a discharge lamp such as an ultrahigh pressure mercury lamp or metal halide lamp. Further, the projector 1 includes a lamp power supply 31, which supplies power to the lamp 21. The lamp 21 generates light in accordance with the power supplied from the lamp power supply 31. The light emitted from the lamp 21 enters the image generation unit 22.

The image generation unit 22 is formed by an electric optical device including for example, a liquid crystal panel, which is a dot matrix type light valve, or a digital micromirror device, which is a matrix array of micromirrors. The image generation unit 22 receives an image signal, which drives the liquid crystal panel or DMD. The light entering the image generation unit 22 from the lamp 21 is passed through the liquid crystal panel or reflected by the DMD to generate an image based on the image signal.

The projection lens 23 is a lens device including a group of lenses that project the light of an image generated by the image generation unit 22. Accordingly, the projection lens 23 projects the light of an image out of the projector 1 to display the image on a plane such as a screen or a wall.

The projector 1 further includes an image signal input 24 and an image signal processing unit 25. The image signal input 24 receives an image signal from an external device. The image signal processing unit 25 performs signal processing on the image signal.

The projector 1 receives an image signal from an external device, such as a personal computer (PC) or an image reproduction device, through the image signal input 24, which is formed by an image signal input terminal connected to a video cable (not shown). The image signal processing unit 25 performs signal processing such as scaling on the image signal received by the projector 1. The image generation unit 22 receives the signal-processed image signal. The image signal input 24 may be a wireless module that receives an image signal transmitted through wireless communication.

The projector 1 includes an intake fan 26, an air filter device 4, and a clogging detector 27. The intake fan 26 draws ambient air into the housing 10 through the intake port 12. The air filter device 4 includes an air filter 42 that captures dust from the air drawn into the housing 15. The clogging detector 27 detects clogging of the air filter 42.

The intake fan 26 draws air into the housing 10 through the intake port 12 and the air filter 42 to cool hot components such as the image generation unit 22 and the lamp power supply 31. The intake fan 26 is a blower that delivers the air drawn into the housing 10 to the lamp 21, which becomes hot.

In the present embodiment, the air filter device 4 is an air filter unit coupled to the projector 1 in a removable manner. The air filter device 4 is coupled to the bottom wall 11 of the housing 10. The air filter device 4 is removed from the front of the projector 1.

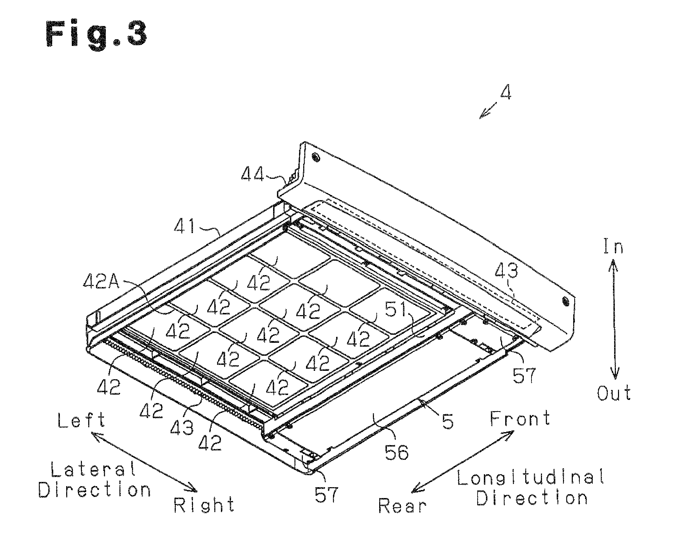

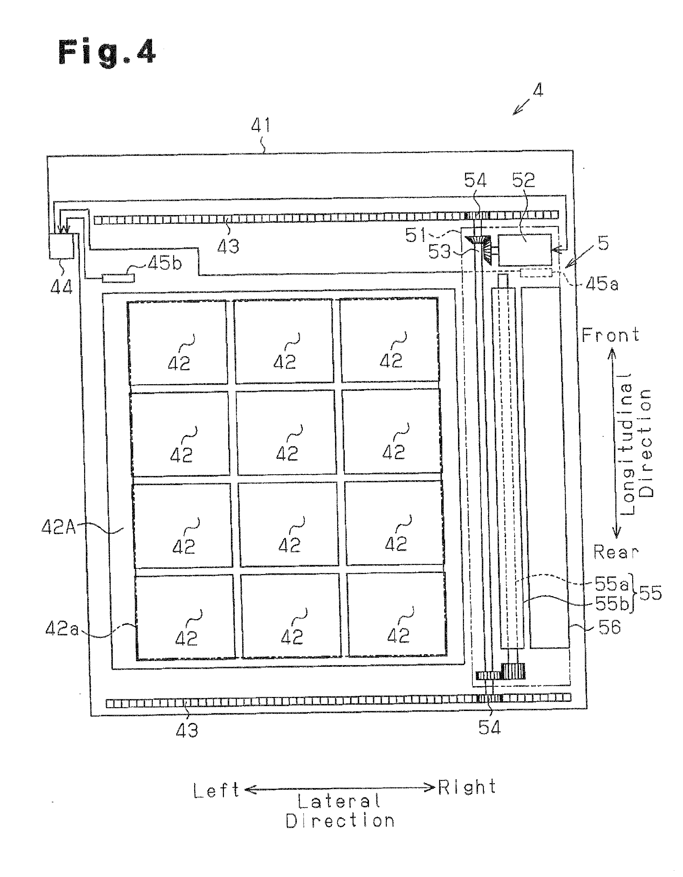

Fig. 3 is a perspective view showing the air filter device 4 in a state removed from the front of the projector 1. Fig. 4 is a schematic plan view showing the air filter device 4 from the outer side. In the description hereafter, a direction extending into the housing 10 is referred to as the inward direction, and the opposite direction is referred to as the outward direction.

As shown in Figs. 3 and 4, the air filter device 4 includes a base 41, which is formed from a resin material. The base 41 includes an opening, which is rectangular like the intake port 12, and air filters 42, which lie over the opening.

The air filters 42, which capture dust, are adhered or fused to a grid-shaped frame 42A. The frame 42A is fastened by screws to the base 41 to arrange the air filter 42 on the base 41.

The air filters 42 of the frame 42A define a single cleaning region 42a. The cleaning region 42a, which is formed on the outer side of the air filters 42, is cleaned to prevent clogging of the air filters 42. In the same manner as the intake port 12, the cleaning region 42a includes long sides and short sides, which extend in two perpendicular directions (longitudinal direction and lateral direction).

Two racks 43 are fastened by screws to the base 41. The racks 43 serve as gears including teeth that extend outward. The air filters 42 are arranged between the racks 43. More specifically, the racks 43 extend in the lateral direction at the front and rear of the air filters 42.

A connector 44 is arranged on a front end of the base 41. When the air filter device 4 is coupled to the projector 1, the connector 44 is connected to a connector (not shown) of the projector 1. The connection of the connector 44 to the connector of the projector 1 allows for power to be supplied from the projector 1 to a motor 52 (refer to Fig. 4) of the air filter device 4.

The air filter device 4 includes a cleaning unit 5, which cleans the air filters 42. Thus, the air filter device 4 is an air filter cleaning device including the air filters 42 and the cleaning unit 5. The cleaning unit 5, which is box-shaped, is arranged at a position at which does not overlap with the air filters 42 when viewed from the outer and inner sides. When arranged at this position, the cleaning unit 5 is in a standby state.

Referring to Fig. 4, the cleaning unit 5 includes a case 51, a motor 52, a drive shaft 53, gears 54, a brush 55, and a dust box 56. The case 51 is elongated in the longitudinal direction. The motor 52 serves as a driver. The drive shaft 53 is driven by the motor 52. The gears 54 rotate with the drive shaft 53 while in engagement with the racks 43. Rotation of the drive shaft 53 is transmitted to the brush 55. The dust box 56 collects dust.

The case 51 accommodates the motor 52, drive shaft 53, and brush 55. Part of the dust box 56 and covers 57 (refer to Fig. 3) cover the motor 52, drive shaft 53, and brush 55 in the case 51.

The motor 52 serves as a driver that rotates the brush 55 and moves the brush 55 and case 51 in the lateral direction, which is a predetermined linear direction. The motor 52 rotates the drive shaft 53 to transmit torque to the gears 54 and the brush 55.

The drive shaft 53 extends in the longitudinal direction and is rotatably supported by the case 51. The two gears 54 are respectively fixed to the two ends of the drive shaft 53 in the longitudinal direction.

Each gear 54 is located outside the case 51 and engaged with the corresponding rack 43. Accordingly, rotation of the drive shaft 53 moves the case 51, which includes the brush 55, in the lateral direction. Thus, the brush 55 moves relative to the air filters 42. The brush 55 moves back and forth in the lateral direction by changing the rotation direction of the drive shaft 53.

The brush 55 includes a shaft 55a and bristles 55b, which are arranged on the shaft 55a. The case 51 rotatably supports the shaft 55a at the two ends of the brush 55 in the longitudinal direction. The bristles 55b of the brush 55 are arranged to contact and clean the cleaning region 42a when the brush 55 moves relative to the air filter 42. Further, rotation of the brush 55 transfers dust from the bristles 55b to the dust box 56, which collects the dust.

The base 41 includes position detectors 45a and 45b, which are sensors that detect the location of the cleaning unit 5 in the air filter device 4. The cleaning unit 5 moves back and forth in the lateral direction, or predetermined linear direction, between a standby position and a return position. The position detector 45a is aligned with the standby position at which the cleaning unit 5 is located in the standby state. The position detector 45b is aligned with the return position. The position detectors 45a and 45b are connected to the connector 44 and output a signal indicating the location of the cleaning unit 5, which includes the brush 55, via the connector 44.

As described above, the air filter device 4 includes the air filters 42, which define the cleaning region 42a, and the brush 55, which moves relative to the air filters 42 to clean the cleaning region 42a. The air filter device 4 is coupled to the projector 1 so that the air filters 42 face the intake port 12.

The clogging detector 27 is a sensor that detects clogging of the air filter 42. For example, the flow rate of the air passing through the air filter 42 changes when the air filter 42 is clogged. Thus, the clogging detector 27 includes an air flow sensor that detects the flow rate of the air passing through the air filter 42.

The projector 1 includes a lamp power supply, a motor drive unit 32, a power supply 33, a control unit 34, a memory 35, and an operation unit 36. The lamp power supply 31 includes a power supply circuit for the lamp 21. The motor drive unit 32 includes a drive circuit for the motor 52. The power supply 33 supplies each unit of the projector 1 with power. The control unit 34 controls each unit of the projector 1. The memory 35 stores information. The operation unit 36 is operated by a user.

The lamp power supply 31 is formed by an illumination device including a circuit for illuminating the lamp 21. More specifically, the lamp power supply 31 includes a lamp ballast circuit (not shown) and an igniter circuit (not shown). The lamp ballast circuit supplies stable power even when the impedance of the discharge lamp, which is a load, changes. The igniter circuit breaks the insulation between electrodes of the discharge lamp. Based on a control signal from the control unit 34, the lamp power supply 31 converts the power supplied from the power supply 33 to power required for illuminating the lamp 21.

The motor drive unit 32 is formed by a motor driver that drives the motor 52 of the cleaning unit 5 when cleaning the air filters 42. The motor drive unit 32 converts the power supplied from the power supply 33 to the motor drive unit 32 based on a control signal received from the control unit 34 and supplies the motor 52 with the converted power. More specifically, when the motor drive unit 32 receives a control signal from the control unit 34 for driving the motor 52 to move the cleaning unit 5 toward the left, the motor drive unit 32 supplies the motor 52 with power for rotating the drive shaft 53 in a predetermined direction. When the motor drive unit 32 receives a control signal from the control unit 34 for driving the motor 52 to move the cleaning unit 5 toward the right, the motor drive unit 32 supplies the motor 52 with power for rotating the drive shaft 53 in a direction opposite the predetermined direction. Further, when the motor drive unit 32 receives a control signal from the control unit 34 for stopping the cleaning unit 5, the motor drive unit 32 stops supplying the motor 52 with power.

The power supply 33 converts the power supplied to the projector 1 from an external power supply (not shown) and supplies the converted power to the electrical circuits in the projector 1. More specifically, the power supply 33 converts AC power, which is received from the external power supply, to DC power and supplies DC power to the lamp power supply 31, the motor drive unit 32, the control unit 34, the image signal processing unit 25, the image generation unit 22, and the like.

The control unit 34 is formed by an integrated circuit that controls the image signal processing unit 25, the intake fan 26, the lamp power supply 31, and the motor drive unit 32.
The control unit 34 sends a control signal to the lamp power supply 31 to illuminate the lamp 21 and display an image. Further, the control unit 34 sends a control signal to the intake fan 26 to drive the intake fan 26 and cool the lamp 21.

The control unit 34 sends a control signal to the motor drive unit 32 to drive the motor 52 of the cleaning unit 5 and clean the air filters 42. When the control unit 34 determines that the air filters 42 are clogged or when the user instructs the control unit 34 to clean the air filters 42, the control unit 34 sends a control signal to the motor drive unit 32.

When the control unit 34 determines that the air filters 42 are clogged or when the user instructs the control unit 34 to clean the air filters 42, the control unit 34 sends a control signal to the motor drive unit 32 to drive the motor 52 and move the cleaning unit 5 toward the left. When the control unit 34 receives a signal from the position detector 45b via the connector 44 indicating that the cleaning unit 5 has reached the left end, the control unit 34 sends a control signal to the motor drive unit 32 to drive the motor 52 and move the cleaning unit 5 toward the right. As the cleaning unit 5 moves toward the right and reaches the standby position, the control unit 34 receives a signal from the position detector 45a via the connector 44 indicating that the cleaning unit 5 has reached the right end. Here, the control unit 34 sends a control signal to the motor drive unit 32 to stop the motor 52 (i.e., cleaning unit 5).

The memory 35 stores information such as programs executed by the control unit 34. The information stored in the memory 35 includes information for determining whether the air filters 42 are clogged. Based on this information and the detection result of the clogging detector 27, the control unit 34 determines whether or not the air filters 42 are clogged.

The operation unit 36 is formed by a user interface such as keys operated by the user of the projector 1. The user operates the operation unit 36 to instruct the control unit 34 to display an image or clean the air filters 42.

Referring to Fig. 4, a feature of the present embodiment is in the brush 55, which extends in the longitudinal direction along the cleansing region 42a.

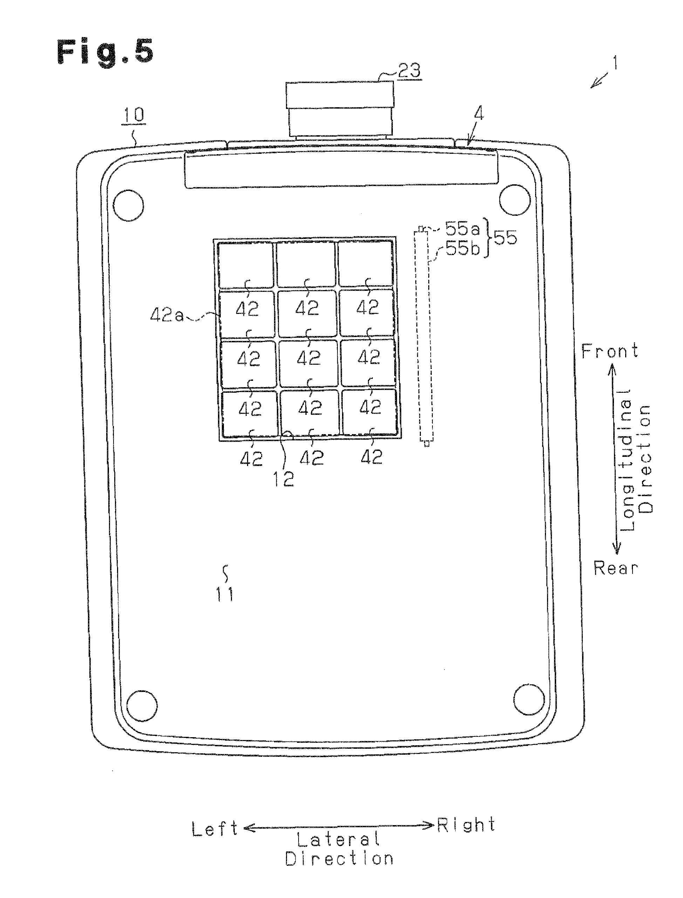

Fig. 5 shows the projector 1 from a direction orthogonal to the bottom wall 11 in a state in which the air filter device 4 is coupled to the projector 1.

As shown in Fig. 5, the air filters 42 are arranged facing toward the intake port 12 and are shaped in conformance with the intake port 12. More specifically, the long sides of the cleaning region 42a are in conformance with the long sides of the intake port 12. The short sides of the cleaning region 42a are in conformance with the short sides of the intake port 12. In the present embodiment, the longitudinal direction of the intake port 12 and the cleaning region 42a is the direction extending toward the front and rear. The lateral direction of the intake port 12 and the cleaning region 42a is the direction extending toward the left and right. Accordingly, the longitudinal direction is perpendicular to the lateral direction.

The cleaning unit 5 is arranged so that the shaft 55a of the brush 55 is parallel to the longitudinal direction of the cleaning unit 5. When the brush 55 cleans the cleaning region 42a, the cleaning unit 5 moves in the lateral direction toward the left and right. Thus, the brush 55 moves in the lateral direction, while the shaft 55a remains parallel to the longitudinal direction, which is perpendicular to the lateral direction. Such movement of the brush 55 shortens the time for moving across the cleaning region in comparison to when the brush 55 moves in the longitudinal direction.

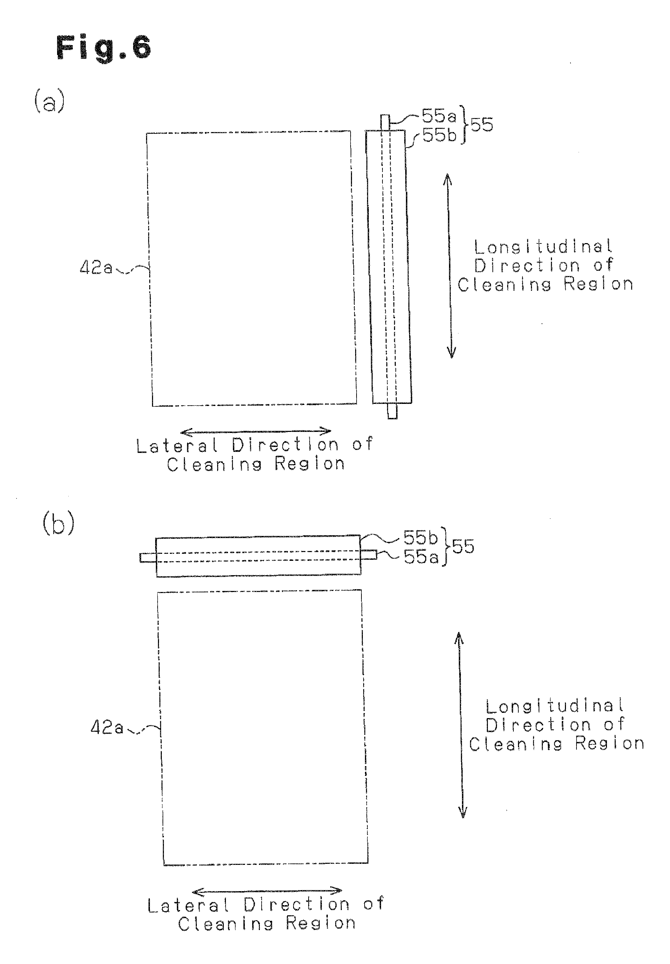

Fig. 6(a) is a schematic diagram showing an example of the present embodiment in which the long sides of the brush 55 extend along the longitudinal direction of the cleaning region 42a. Fig. 6(b) is a schematic diagram showing a comparative example in which the long sides of the brush 55 extend along the lateral direction of the cleaning region 42a.

When the brush 55 is arranged as shown in Fig. 6(a), the brush 55 moves in the lateral direction of the cleaning region 42a to entirely clean the cleaning region 42a. In contrast, when the brush 55 is arranged as shown in Fig. 6(b), the brush 55 moves in the longitudinal direction of the cleaning region 42a to entirely clean the cleaning region 42a.

As described above, when entirely cleaning the cleaning region 42a, the brush 55 moves across the cleaning region 42a. When the brush 55 moves across the cleaning region 42a in the lateral direction, the distance the brush 55 moves is shorter than that when the brush 55 moves across the cleaning region 42a in the longitudinal direction. Thus, as long as the speed of the brush 55 is the same, the brush 55 that moves in the lateral direction moves more quickly across the cleaning region 42a. Accordingly, the time required for the brush 55 to move and clean the air filters 42 (i.e., cleaning time of the brush 55) is shortened.

The present embodiment has the advantages described below.

(1) The long sides of the cleaning region 42a extend perpendicular to the short sides of the cleaning region 42a. That is, the long sides and short sides extend in two perpendicular directions, namely, the longitudinal direction and the lateral direction). The brush 55 extends along the long sides of the cleaning region 42a. Accordingly, the cleaning time of the brush 55 is shortened in comparison to when the brush 55 extends along the short sides of the cleaning region 42a. This suppresses noise (e.g., noise of the motor 52) produced when the brush 55 cleans the air filters 42.

In other words, the brush 55 moves along the short sides of the cleaning region 42a. Accordingly, in comparison to when the brush 55 moves along the long sides of the cleaning region 42a, the time required for the brush 55 to move across the cleaning region 42a is shortened. This shortens the cleaning time of the brush 55.

(2) The projector 1, which is an electronic device, includes the air filter device 4. Accordingly, the projector 1 of the present embodiment has advantage (1).

(3) The air filter device 4 is coupled to the projector 1 in a removable manner. Removal of the air filter device 4 from the projector 1 facilitates maintenance of the air filter device 4.

(4) The housing 10 of the projector 1 includes the intake port 12, which is an opening. The cleaning region 42a is arranged facing toward the intake port 12. The long sides of the intake port 12 extend perpendicular to the short sides of the intake port 12. That is, the long sides and short sides extend in two perpendicular directions. Further, the cleaning region 42a includes long sides extending along the longitudinal direction of the intake port 12 and short sides extending along the lateral direction of the intake port 12. Thus, the cleaning region 42a faces the intake port 12 in a state sufficiently covering the intake port 12.

It should be apparent to those skilled in the art that the present invention may be embodied in many other specific forms without departing from the spirit or scope of the invention. Particularly, it should be understood that the present invention may be embodied in the following forms.

The air filter device 4 does not have to be removable from the projector 1. As long as the projector 1 incorporates the air filter device 4, advantages (2) and (4) are obtained.

In the embodiment described above, the brush 55 moves with the case 51 of the cleaning unit 5 to clean the air filters 42. However, the brush 55 need only move relative to the air filters 42. That is, the cleaning unit 5, which includes the brush 55, is not limited to the structure of the embodiment described above.

In the embodiment described above, the cleaning unit 5, which includes the brush 55, is driven. Instead, the air filter 42 may be driven. More specifically, as long as the brush 55 moves relative to the air filters 42, at least either one of the brush 55 and the air filters 42 may be driven.

In the embodiment described above, the frame 42A for the air filters 42 is grid-shaped but does not have to be grid-shaped. Further, as described above, a grid may be arranged in the intake port 12. In this case, it is preferable that the grid in the intake port 12 be formed by part of the housing 10.

In the embodiment described above, the longitudinal direction of the cleaning region 42a is the direction extending toward the front and rear, and the lateral direction of the cleaning region 42a is the direction extending toward the left and right. However, the longitudinal and lateral directions are not limited to such directions. That is, the cleaning region 42a need only include long sides and short sides extending in two perpendicular directions. Accordingly, the direction in which the brush extends and the longitudinal and lateral directions of the intake port are not limited as described in the above embodiment.

In the embodiment described above, the electronic device is the projector 1, which is a video projector, but may be another type of electronic device. More specifically, the present invention is not limited to a video projector and may be applied to other electronic devices such as a television or audio equipment.

The present examples and embodiments are to be considered as illustrative and not restrictive, and the invention is not to be limited to the details given herein, but may be modified within the scope and equivalence of the appended claims.

## Claims

1. An air filter cleaning device comprising:
an air filter including a cleaning region; and
a brush that cleans the cleaning region while moving relative to the air filter;
wherein the cleaning region includes a first side and a second side that extend in two perpendicular directions; and
the brush extends along the longer one of the first and second sides.

2. An electronic device comprising the air filter cleaning device according to claim 1.

3. The electronic device according to claim 2, wherein the air filter cleaning device is coupled to the electronic device in a removable manner.

4. The electronic device according to claim 2, further comprising a housing including an intake port, wherein
the intake port includes a long side extending in a longitudinal direction of the intake port and a short side extending in a lateral direction of the intake port, and
the first side of the cleaning region corresponds to the long side of the intake port, and the second side of the cleaning region corresponds to the short side of the intake port.

5. The electronic device according to claim 2, further comprising a housing including an intake port, which is an opening, wherein
the air filter includes a grid-shaped frame formed integrally with the housing in the intake port,
the first and second sides, which extend in the two perpendicular directions, have different lengths in the intake port,
the intake port and the cleaning region are located at the same position, and
the cleaning region includes a long side extending in a longitudinal direction of the intake port and a short side extending in a lateral direction of the intake port.

6. An air filter cleaning device comprising:
an air filter including a cleaning region; and
a brush that cleans the cleaning region while moving relative to the air filter;
wherein the cleaning region includes a first side and a second side that extend in two perpendicular directions; and
the brush moves along the shorter one of the first and second sides.

7. An electronic device comprising the air filter cleaning device according to claim 6.

8. The electronic device according to claim 7, wherein the air filter cleaning device is coupled to the electronic device in a removable manner.

9. The electronic device according to claim 7, further comprising a housing including an intake port, wherein
the intake port includes a long side extending in a longitudinal direction of the intake port and a short side extending in a lateral direction of the intake port, and
the first side of the cleaning region corresponds to the long side of the intake port, and the second side of the cleaning region corresponds to the short side of the intake port.

10. The electronic device according to claim 7, further comprising a housing including an intake port, which is an opening, wherein
the air filter includes a grid-shaped frame formed integrally with the housing in the intake port,
the first and second sides, which extend in the two perpendicular directions, have different lengths in the intake port,
the intake port and the cleaning region are located at the same position, and
the cleaning region include a long side extending in a longitudinal direction of the intake port and a short side extending in a lateral direction of the intake port.
